# EUROPEAN PATENT SPECIFICATION

(11) **EP 3 510 236 B1**
(45) Date of publication and mention of the grant of the patent: **14.07.2021**
(21) Application number: 17849746.7
(22) Date of filing: 11.09.2017
(51) Int. Cl.: E21B 17/05, E21B 17/20, E21B 19/16, E21B 41/00, F16L 25/00, F16L 27/00, F17D 1/08, E21B 33/068

(54) **FRAC FLOWLINE SYSTEM**
FRACKING-FLOWLINE-SYSTEM
SYSTÈME DE CONDUITE D'ÉCOULEMENT DE FRACTURATION

(30) Priority: 09.09.2016 US 201662385813 P
(43) Date of publication of application: 17.07.2019
(73) Proprietor: FMC Technologies, Inc., Houston, Texas 77079 (US)
(72) Inventor: UNGCHUSRI, Tep, Houston, TX (US); PURSLEY, Mike, Houston, TX (US); ALBRIGHT, William, Houston, TX (US); COOK, James, Stephenville, TX (US); OGG, Nathan, Houston, TX (US)
(74) Representative: Onsagers AS
(86) International application number: PCT/US2017/051030
(87) International publication number: WO 2018/049360

(56) References cited:
- AU-A1- 2015 258 313
- DE-U1-202007 019 338
- GB-A- 1 022 572
- JP-A- 2009 174 648
- US-A- 4 362 324
- US-A- 5 149 148
- US-A1- 2010 193 057
- US-A1- 2010 300 672
- US-A1- 2013 175 038
- US-A1- 2013 175 039
- US-A1- 2014 231 554
- US-A1- 2016 153 596
- US-A1- 2016 208 570
- US-B1- 9 050 545

## Description

The present application is based on and claims priority from U.S. Provisional Patent Application No. 62/385,813 filed on September 9, 2016.

The present disclosure is directed a flowline assembly for use in, e.g., hydrocarbon well fracturing operations. More specifically, the disclosure is directed to a flowline assembly which is comprised of a number of novel swivel joints that enable the flowline assembly to be easily installed and configured. The disclosure is also directed to a method for assembling a flowline assembly comprising a number of the novel swivel joints.

### BACKGROUND OF THE DISCLOSURE

Hydraulic fracturing operations typically require pumping large volumes of fracking fluid at high pressure into a reservoir through a wellbore. That wellbore is typically capped with one or more valves, collectively referred to as a christmas tree, that contain the pressure within the wellbore. The fracking fluid is directed to the christmas tree and into the reservoir through a plurality of fluid conduits, including flowlines and manifolds, which fluidly connected the pumps to the tree.

Depending on the space available at the site of the fracturing operation, positioning the manifolds and pumps such that they can be connected to the tree can be difficult. Where multiple wellbores/trees are present, the spacing between the manifolds and the trees may be non-uniform, making fixed connections difficult.

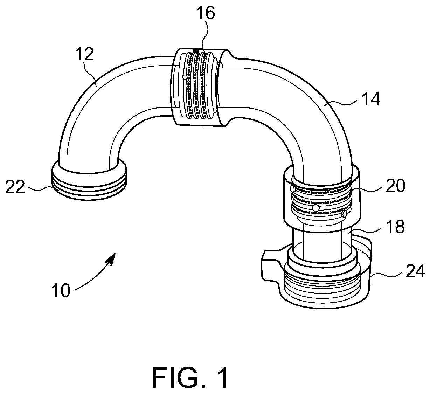

Adjustable flowline assemblies between manifolds and trees have been used for many years to overcome the alignment issues. A common type of adjustable flowline assembly - sometimes referred to as "frac iron" - comprises multiple pipe segments or joints that are coupled together by Chiksan®-style swivel joints, which provide freedom to adjust and position the flowline assembly as needed between the manifold and the tree. In certain existing systems, swivel joints may take a form similar to the Chiksan®-style swivel joint 10 illustrated in Fig. 1. As depicted, the swivel joint 10 includes two 90-degree bends 12 and 14 which are coupled together at a triple step interface 16 that provides rotational freedom between the bends. The swivel joint 10 further includes a straight portion 18 that is coupled to the bend 14 at an end opposite bend 12 via another triple step interface 20 which provides rotational freedom between the straight portion 18 and the bend 14. The swivel joint 10 is term inated at one end by a threaded connection 22 and at the other end by a hammer nut 24, both of which may be used to couple the swivel joint 10 to one or more pipe segments or joints that make up part of the overall flowline assembly. When connected to a pipe segment or joint via the hammer union 24, the pipe segment may rotate with respect to the bends 12, 14 and the swivel joint 10 collectively through its connection to the straight portion 18 and the interface 20. Existing swivel joints with different combinations of bends, straight portions, and rotating interfaces have also been used in the prior art, such as swivel joints having a single bend which is connected at both ends to corresponding straight segments via rotating interfaces so that the segments or joints coupled thereto can rotate with respect to the bend.

Although these adjustable flowline assemblies are commonly used, they typically require a long time to make up due to the number of connections necessary within each flowline assembly and the number of flowline assemblies needed for a particular fracturing site. For instance, an example of a system incorporating these type of connections, which is illustrated in U.S. Patent Application Publication No. 2010/0300672, requires multiple adjustable flowline assemblies between the manifold and each tree. With each of these flowline assemblies requiring multiple connections using hammer unions, threaded connections, etc., a relatively long time is required to rig up the fracturing system. Newer systems, such as the system described in U.S. Patent No. 9,068,450, provide the adjustable functionality in a single flowline assembly using pipe segments having swivel flanges that are coupled to a plurality of 90-degree elbow blocks. Although this system reduces the total number of flowline assemblies and the connections associated with the additional flowline assemblies, it is heavy and difficult to manage, and still requires multiple connections that are made up in the field. These connections include bolted flange connections that take longer than the hammer unions used in the earlier flowline systems.

US 2016/0208570 A1 discloses a hydraulic fracturing assembly which includes a frac tree that mounts to a wellhead. An injection tee mounts to the tree, the injection tee having an axial injection tee bore that registers with an axial flow bore of the frac tree. A single inlet passage in the injection tee extends from a flow line mounting face on an exterior portion of the injection tee downward and inward into a junction with the axial flow bore. A flow line connects to the mounting face to deliver fluid into the inlet passage.

### SUMMARY OF THE DISCLOSURE

In accordance with the present disclosure, these and other disadvantages in the prior art are addressed by providing a flowline assembly which comprises at least one swivel joint assembly having a female hub which comprises a generally cube-shaped female body portion, a first female end portion which extends linearly from a first side of the female body portion, a first female recess which is formed axially in the first female end portion, and a second female end portion which extends linearly from a second side of the female body portion that is oriented approximately ninety degrees from the first side of the female body portion; a male member which includes a cylindrical end portion that is configured to be rotatably received in the first female recess; and first means for rotatably securing the end portion of the male member within the first female recess.

In accordance with one aspect of the disclosure, the male member comprises a male hub which includes a generally cube-shaped male body portion, a first male end portion which extends linearly from a first side of the male body portion, and a second male end portion which extends linearly from a second side of the male body portion that is oriented approximately ninety degrees from the first side of the male body portion. In this embodiment, the cylindrical end portion of the male member comprises a cylindrical outer surface portion of the second male end portion.

In accordance with another aspect of the disclosure, the swivel joint assembly also comprises at least one of a first connector member which is located at a distal end of the first male end portion and a second connector member which is located at a distal end of the second female end portion.

In accordance with yet another aspect of the disclosure, one of the first male end portion and the second female end portion comprises a cylindrical first end recess which is formed axially therein, and the swivel joint assembly further comprises a first straight pipe segment which includes a first end portion that is configured to be rotatably received in the first end recess; and second means for rotatably securing the first end portion within the first end recess.

In accordance with an aspect of the disclosure, the swivel joint assembly further comprises a first connector member which is located at a distal end of the first pipe segment and a second connector member which is located at a distal end of the other of the first male end portion and the second female end portion.

In accordance with a further aspect of the disclosure, the first male end portion comprises a cylindrical first end recess which is formed axially therein, the second female end portion comprises a cylindrical second end recess which is formed axially therein, and the swivel joint assembly further comprises a first straight pipe segment which includes a first end portion that is configured to be rotatably received in the first end recess; a second straight pipe segment which includes a first end portion that is configured to be rotatably received in the second end recess; second means for rotatably securing the first end portion of the first straight pipe segment within the first end recess; and third means for rotatably securing the first end portion of the second straight pipe segment within the second end recess.

In accordance with another aspect of the disclosure, the swivel joint assembly further comprises a first connector member which is located at a distal end of the first pipe segment and a second connector member which is located at a distal end of the second pipe segment.

In accordance with another aspect of the disclosure, the male member comprises a first straight pipe segment and the cylindrical end portion of the male member comprises a cylindrical first end portion of the first pipe segment.

In accordance with yet another aspect of the disclosure, the second female end portion comprises a second female recess which is formed axially therein, and the swivel joint assembly further comprises: a second straight pipe segment which includes a first end portion that is configured to be rotatably received in the second female recess; and second means for rotatably securing the first end portion of the second pipe segment within the second female recess.

In accordance with another aspect of the disclosure, the flowline assembly also includes at least one of a first connector member which is located at a distal end of the first pipe segment and a second connector member which is located at a distal end of the second pipe segment.

In accordance with yet another aspect of the disclosure, the flowline assembly further comprises a second female hub which comprises a generally cube-shaped female body portion, a first female end portion which extends linearly from a first side of the female body portion, a first female recess which is formed axially in the first female end portion, and a second female end portion which extends linearly from a second side of the female body portion that is oriented approximately ninety degrees from the first side of the female body portion; wherein the first pipe segment comprises a cylindrical second end portion which is configured to be rotatably received in the first female recess of the second female hub; and second means for rotatably securing the second end portion of the first pipe segment within the first female recess of the second female hub.

In accordance with a further aspect of the disclosure, at least one of the second female end portion of the first female hub and the second female end portion of the second female hub comprises a cylindrical first end recess which is formed axially therein, and wherein the swivel joint assembly further comprises: a second straight pipe segment which includes a first end portion that is configured to be rotatably received in the first end recess; and third means for rotatably securing the first end portion of the second pipe segment within the first end recess.

In accordance with another aspect of the disclosure, the swivel joint assembly further comprises a connector member which is located at a distal end of the second pipe segment.

In accordance with yet another aspect of the disclosure, the swivel joint assembly further comprises a male hub which includes a generally cube-shaped male body portion, a first male end portion which extends linearly from a first side of the male body portion, a first male recess which is formed axially in the first male end portion, and a second male end portion which extends linearly from a second side of the male body portion that is oriented approximately ninety degrees from the first side of the male body portion; wherein the first pipe segment comprises a cylindrical second end portion which is configured to be rotatably received in the first male recess; and second means for rotatably securing the cylindrical second end portion of the first pipe segment within the first male recess.

In accordance with a further aspect of the disclosure, at least one of the second female end portion and the second male end portion comprises a cylindrical first end recess which is formed axially therein, and wherein the swivel joint assembly further comprises a second straight pipe segment which includes a first end portion that is configured to be rotatably received in the first end recess; and third means for rotatably securing the first end portion of the second pipe segment within the first end recess.

In accordance with another aspect of the disclosure, the swivel joint assembly further comprises a connector member which is located at a distal end of the second pipe segment.

In accordance with yet another aspect of the disclosure, the flowline assembly further comprises a second female recess which is formed axially in the second female end portion; a second male hub which includes a generally cube-shaped male body portion, a first male end portion which extends linearly from a first side of the male body portion, and a second male end portion which extends linearly from a second side of the male body portion that is oriented approximately ninety degrees from the first side of the male body portion; wherein the second male end portion of the second male hub comprises an outer surface portion which configured to be rotatably received in the second female recess; and second means for rotatably securing the outer surface portion of the second male end of the second male hub within the second female recess.

In accordance with a further aspect of the disclosure, the swivel joint assembly also comprises at least one of a first connector member which is located at a distal end of the first male end portion of the first male hub and a second connector member which is located at a distal end of the first male end portion of the second male hub.

In accordance with another aspect of the disclosure, at least one of the first male end portion of the first male hub and the first male end portion of the second male hub comprises a cylindrical first male recess which is formed axially therein, and wherein the swivel joint assembly further comprises: a first straight pipe segment which includes a first end portion that is configured to be rotatably received in the first male recess; and third means for rotatably securing the first end portion of the first pipe segment within the first male recess.

In accordance with yet aspect of the disclosure, the swivel joint assembly further comprises a connector member which is located at a distal end of the first pipe segment.

In the above disclosures the connector members may each comprise, e.g., a clamp connector, a drill through flanged end connection, a studded end connection, a hammer union connector, a Grayloc® connector or a Speedloc® connector.

An embodiment of the present disclosure is also directed to a method for fluidly connecting a fracturing manifold to a fracturing tree. The method comprises the steps of: (a) providing a first flowline assembly which comprises a number of first swivel joints; (b) connecting a first end of the first flowline assembly to the manifold; (c) providing a second flowline assembly; (d) connecting a first end of the second flowline assembly to the tree; and (e) after the first flowline assembly is connected to the manifold and the second manifold assembly is connected to the tree, connecting a second end of the first flowline assembly to a second end of the second flowline assembly to thereby fluidly connect the manifold to the tree.

In accordance with one aspect of the embodiment, the method further comprises the step of, after step (b) but prior to step (e), transporting the manifold with the first flowline assembly connected thereto to a location proximate the tree.

In accordance with another aspect of the embodiment, the method further comprises the steps of, after steps (b) and (d) but prior to step (e), pressure testing at least one of the first flowline assembly and the second flowline assembly.

In accordance with yet another aspect of the embodiment, the method further comprises the steps of providing a lifting device; and after steps (b) and (d) but prior to step (e), using the lifting device to move the second end of the first flowline assembly into position for connection to the second end of the second flowline assembly.

In accordance with a further aspect of the embodiment, the second flowline assembly comprises a fixed tee which is connected to the tree and a first pipe segment which is connected to the fixed tee, and wherein a distal end of the first pipe segment comprises the second end of the second flowline assembly.

In accordance with another aspect of the embodiment, the second flowline assembly comprises a fixed tee which is connected to the tree, a first pipe segment which is connected to the fixed tee and a first flowline subassembly which is connected to a distal end of the first pipe segment, wherein the first flowline subassembly comprises a number of second swivel joints, and wherein a distal end of the first flowline subassembly comprises the second end of the second flowline assembly.

In accordance with yet another aspect of the embodiment, the second flowline assembly comprises a second swivel joint which is connected to the tree and a first pipe segment which is connected to the second swivel joint, and wherein a distal end of the first pipe segment comprises the second end of the second flowline assembly.

In accordance with a further aspect of the embodiment, the second flowline assembly comprises a second swivel joint which is connected to the tree, a first pipe segment which is connected to the second swivel joint and a first flowline subassembly which is connected to a distal end of the first pipe segment, wherein the first flowline subassembly comprises a number of third swivel joints, and wherein a distal end of the first flowline subassembly comprises the second end of the second flowline assembly.

In accordance with another aspect of the embodiment, the method further comprises the step of providing a third flowline assembly; wherein step (e) comprises connecting a first end of the third flowline assembly to a second end of the first flowline assembly and connecting a second end of the third flowline assembly to the second end of the second flowline assembly.

In accordance with yet another aspect of the embodiment, the method further comprises the steps of providing a lifting device; and using the lifting device to move the first and second ends of the third flowline assembly into position for connection to the second end of the first flowline assembly and the second end of the second flowline assembly, respectively.

A further embodiment of the present disclosure is also directed to a flowline system for fluidly connecting a fracturing manifold to a fracturing tree. The flowline system comprises a first flowline assembly which is pre-assembled with the manifold, the first flowline assembly comprising a number of preassembled first flowline components and a first connection member which is located distally of the manifold; and a second flowline assembly which is connected to the tree, the second flowline assembly comprising a number of preassembled second flowline components and a second connection member which is located distally of the tree; wherein the first and second connection members are configured to be releasably connected together to thereby fluidly connect the manifold to the tree.

In accordance with one aspect of the embodiment, the second flowline assembly comprises a fixed tee which is connected to the tree and a first pipe segment which is connected to the fixed tee, and the second connection member is located at a distal end of the first pipe segment.

In accordance with another aspect of the embodiment, the second flowline assembly comprises a fixed tee which is connected to the tree, a first pipe segment which is connected to the fixed tee and a first flowline subassembly which is connected to a distal end of the first pipe segment, the first flowline subassembly comprises a number of swivel joints, and the second connection member is located at a distal end of the first flowline subassembly.

In accordance with yet another aspect of the embodiment, the second flowline assembly comprises a swivel joint which is connected to the tree and a first pipe segment which is connected to the swivel joint, and the second connection member is located at a distal end of the first pipe segment.

In accordance with a further aspect of the embodiment, the second flowline assembly comprises a first swivel joint which is connected to the tree, a first pipe segment which is connected to the first swivel joint and a first flowline subassembly which is connected to a distal end of the first pipe segment, the first flowline subassembly comprises a number of second swivel joints, and the second connection member is located at a distal end of the first flowline subassembly.

In accordance with another aspect of the embodiment, the system further comprises a third flowline assembly which comprises a first end on which a third connection member is located and a second end on which a fourth connection member is located; wherein the first and third connection members and the second and fourth connection members are configured to be releasably connected together, respectively, to thereby fluidly connect the manifold to the tree.

In accordance with yet another aspect of the embodiment, the system comprises a lifting device which is configured to move the third flowline assembly into position for connection of the first connection member to the third connection member and the second connection member to the fourth connection member.

Thus, it may be seen that the present disclosure is directed to a apparatus, method and system for providing an improved flowline assembly for connecting a fracturing manifold to a fracturing tree, or any other elements of a fracturing system. The flowline assembly provides adjustable functionality in the form of an improved swivel joint which can be combined in a variety of ways to achieve multiple degrees of rotational freedom. In addition, the complete flowline assembly comprises pre-assembled first and second flowline assemblies which can each be connected to the tree and the manifold, respectively, independent of the other flowline assembly. As a result, the only a single connection (i.e., the connection between each flowline assembly) needs to be made up at the fracturing site in order to complete the connection between the manifold and the tree.

These and other objects and advantages of the present disclosure will be made apparent from the following detailed description, with reference to the accompanying drawings. In the drawings, the same reference numbers may be used to denote similar components in the various embodiments.

### BRIEF DESCRIPTION OF THE DRAWINGS

Figure 1 is a perspective, partial cross sectional view of a prior art Chiksan®-style swivel joint;
Figure 2 is a cross sectional view of a first embodiment of a swivel joint which is suitable for use in the flowline assembly of the present disclosure;
Figure 3 is a cross sectional view of a second embodiment of a swivel joint which is suitable for use in the flowline assembly of the present disclosure;
Figure 4 is a cross sectional view of a third embodiment of a swivel joint which is suitable for use in the flowline assembly of the present disclosure;
Figure 5 is a cross sectional view of a fourth embodiment of a swivel joint which is suitable for use in the flowline assembly of the present disclosure;
Figure 6 is a side view of one embodiment of a flowline assembly of the present disclosure shown installed between a representative manifold and a typical tree which may be used, e.g., in a fracturing operation;
Figure 7 is a top view of the flowline assembly shown in Figure 6;
Figure 8 is a side view of another embodiment of a flowline assembly of the present disclosure shown installed between a representative manifold and a typical tree which may be used, e.g., in a fracturing operation;
Figure 9 is a top view of the flowline assembly shown in Figure 8;
Figure 10 is a side view of a further embodiment of a flowline assembly of the present disclosure shown installed between a representative manifold and a typical tree which may be used, e.g., in a fracturing operation;
Figure 11 is a top view of the flowline assembly shown in Figure 10;
Figure 12 is a top perspective view of the flowline assembly shown in Figure 10;
Figure 13 is a side view illustrating one method of installing a flowline assembly of the present disclosure between a representative manifold and a typical tree which may be used, e.g., in a fracturing operation; and
Figure 14 is a side view illustrating another method of installing a flowline assembly of the present disclosure between a representative manifold and a typical tree which may be used, e.g., in a fracturing operation.

### DETAILED DESCRIPTION

The present disclosure is directed to a system, apparatus and method for improved fluid connection between elements of a fracturing system which offers adjustable functionality in the form of an improved swivel joint that can be deployed in a single flow path and is easier to install and comprises fewer field connections than the prior art elbow block system.

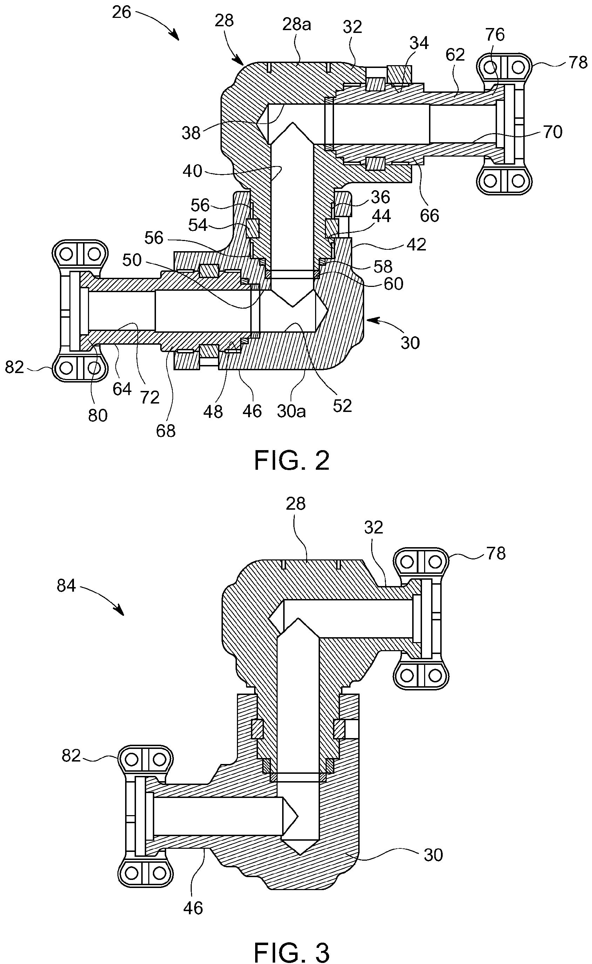

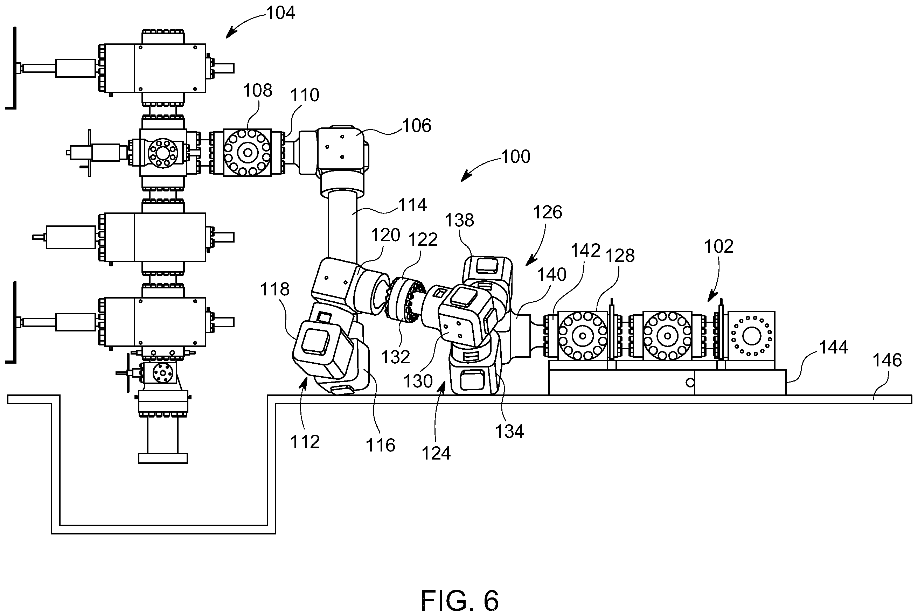

The flowline assembly of the present disclosure employs a number of swivel joints to impart flexibility to the assembly. A first embodiment of one such swivel joint is shown in Figure 2. The swivel joint of this embodiment, generally 26, includes a male hub 28 which is rotatably connected to a female hub 30. The male hub 28 includes a generally cube-shaped male body portion 28a (see, e.g., Figure 6), a first male end portion 32 which extends linearly from a first side of the male body portion, a cylindrical recess 34 which is formed in the first male end portion, a second male end portion 36 which comprises a cylindrical outer diameter surface and extends linearly from a second side of the male body portion that is oriented approximately ninety degrees from the first side, and a male flowbore which extends through the male hub from a base of the recess to a distal end of the second male end portion. The male flowbore includes a first male flowbore section 38 which extends through the male body portion 28a and the first male end portion 32 to the recess 34, and a second male flowbore section 40 which extends at an angle, for example ninety degrees, from the first male flowbore section through the distal end of the second male end portion 36.

The female hub 30 includes a generally cube-shaped female body portion 30a (see, e.g., Figure 6), a first female end portion 42 which extends linearly from a first side of the female body portion, a first female recess 44 which is formed in the first female end portion, a second female end portion 46 which extends linearly from a second side of the female body portion that is oriented approximately ninety degrees from the first side, a second female recess 48 which is formed in the second female end portion, and a female flowbore which extends through the female hub from a base of the first female recess to a base of the second female recess. The female flowbore includes a first female bore section 50 which extends through the female body portion 30a and the first female end portion 42 to the first recess 44, and a second female bore section 52 which extends at an angle, for example ninety degrees, from the first female flowbore section to the second recess 48.

The male and female hubs 28, 30 may be rotatably connected using a swivel connection of the type described in U.S. Patent No. 5,149,148. Referring still to Figure 2, the second male end portion 36 of the male hub 28 is received in the first female recess 44 of the female hub 30 and is secured therein by, e.g., a suitable thrust bearing 54 which is received in corresponding aligned radial grooves in the second male end portion and the first female recess. Also, a number of sleeve bearings 56 are positioned between the second male end portion 36 and the first female recess 44 to facilitate relative rotation therebetween. In this manner, the male hub 28 is rotatably connected to the female hub 30. In addition, the male hub 28 is sealed to the female hub 30 by, e.g., a suitable radial seal 58 which is positioned between the outer diameter surface of the second male end portion 36 and the first female recess 44, and possibly also a suitable end seal 60 which is positioned between the distal end of the second male end portion and a shoulder which is formed at the intersection of the first female bore section 50 and the first female recess.

In the disclosure shown in Figure 2, the swivel joint 26 also includes a first straight pipe segment 62 which is rotatably connected to the male hub 28 and a second straight pipe segment 64 which is rotatably connected to the female hub 30, each using a swivel connection of the type described above for rotatably connecting the male hub to the female hub, for example. The first pipe segment 62 includes a first end portion 66 which is configured to be received in the male recess 34 of the first male end portion 34. Similarly, the second pipe segment 64 includes a first end portion 68 which is configured to be received in the second female recess 48 of the second female end portion 46. The first end portions 66, 68 may be secured and sealed to the male recess 34 and the second female recess 48, respectively, using means similar to those described above for securing and sealing the second male end portion 36 of the male hub 28 to the first female recess 44 of the female hub 30.

The first pipe segment 62 comprises a first pipe flowbore 70 which is connected to the first male flowbore 38 of the male hub 28, and the second pipe segment 64 comprises a second pipe flowbore 72 which is connected to the second female flowbore 52 of the female hub 30. The first pipe segment 62 also includes a second end portion 76 to which a first connector, such as a first clamp connector 78, may be secured to enable the male hub 28 to be connected to a second component of the flowline assembly (not shown). Likewise, the second pipe segment 64 includes a second end portion 80 to which a second connector, such as a second clamp connector 82, may be secured to enable the male hub 28 to be connected to a third component of the flowline assembly (not shown). In this manner, the swivel joint 26 provides a sealed fluid conduit between the second and third components of the flowline assembly. Also, the swivel connections between the first pipe segment 62 and the male hub 28, between the male hub and the female hub 30, and between the female hub and the second pipe segment 64 provide three degrees of rotational freedom between the second and third components which allow great flexibility in the configuration of the flowline assembly.

A second example of the swivel joint of the present disclosure is shown in Figure 3. The swivel joint of this disclosure, generally 84, is similar in many respects to the swivel joint 26 described above. Thus, the swivel joint 84 includes a male hub 28 which is rotatably connected to a female hub 30 using a swivel connection of the type described above. In contrast to the swivel joint 26, however, swivel joint 84 does not comprise the first and second straight pipe segments 62, 64 which are rotatably connected to the male and female hubs 28, 30, respectively. Instead, the first male end portion 32 is configured to be secured to a suitable first connector, such as a first clamp connector 78, and the second female end portion is configured to be secured to a suitable second connector, such as a second clamp connector 82. Thus, the swivel joint 84 provides a single degree of rotational freedom between the components (not shown) which are connected to the swivel joint via the first and second clamp connectors 78, 82.

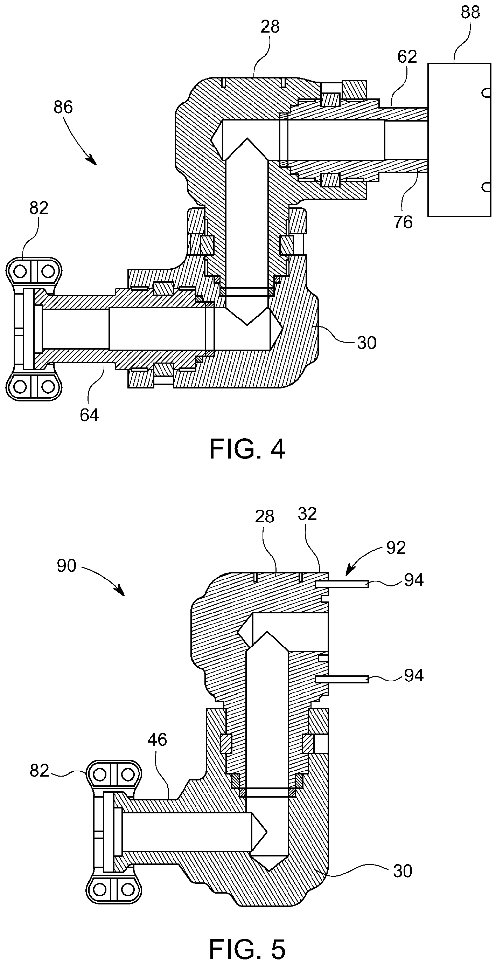

A third example of the swivel joint of the present disclosure is shown in Figure 4. The swivel joint of this disclosure, generally 86, is similar to the swivel joint 26 described above. Accordingly, the swivel joint 86 includes a male hub 28 which is rotatably connected to a female hub 30, a first straight pipe segment 62 which is rotatably connected to the male hub, and a second straight pipe segment 64 which is rotatably connected to the female hub, each using a swivel connection of the type described above. In this disclosure, however, a flanged end connection 88, such as a conventional API 6A drill through flanged end connection, is connected to or formed integrally the second end portion 76 of the first pipe segment 62. The flanged end connection 88 enables the first pipe segment 62 to be bolted to a matching connection of another component of the flowline assembly (not shown).

A fourth example of the swivel joint of the present disclosure is shown in Figure 5. The swivel joint of this disclosure, generally 90, is similar to the swivel joint 84 discussed above. Thus, the swivel joint 90 includes a male hub 28 which is rotatably connected to a female hub 30, such as with a swivel connection of the type described above. In this disclosure, however, the first male end portion 32 of the male hub 28 is truncated and is configured as a studded end connection 92, such as a conventional API 6A studded end connection, which includes a number of bolts 94 that are secured in the distal end of the first male end portion. This studded end connection is particularly suitable for use with the flanged end connection 88 of the swivel joint 86 described above.

It should be apparent from the above description that the different swivel joints just described may be connected together into a single flowline assembly to enable the flowline assembly to be easily configured for connection between components which are spaced apart both vertically and horizontally, which are angularly offset relative to each other, and which employ different connectors. For example, the end portions of the swivel joints can be pre-fabricated with different end flanges to accommodate a variety of connectors, such as a flanged end for a studded end connection or a naked flange for Grayloc® or Speedloc® connector. In addition, a straight pipe segment can be connected to an adjacent swivel joint, and single or triple-bend swivel joints can be made using the swivel joints described above as building blocks. Also, instead of a comprising both a male hub and a female hub, a swivel joint could be constructed with two female hubs joined by a length of straight pipe.

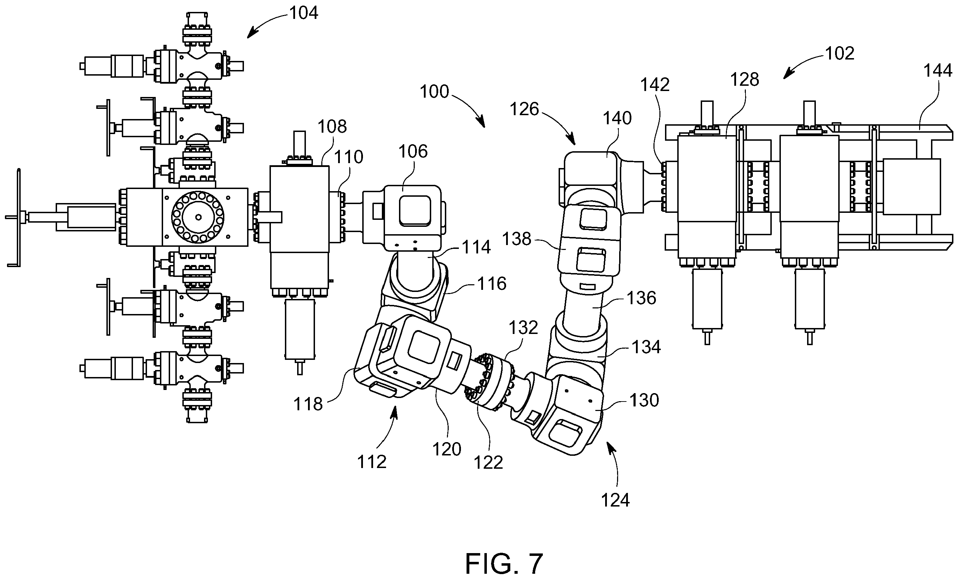

A first embodiment of a flowline assembly which is constructed using the swivel joints of the present disclosure is shown in Figures 6 and 7. The flowline assembly of this embodiment, generally 100, is shown being used to connect a flowline manifold 102 to a christmas tree 104. The flowline assembly includes a single-bend swivel joint 106 which is connected to a valve block 108 on the tree 104 using a flanged end connection 110 similar to the flanged end connection 88 described above in connection with the swivel joint 86. The single-bend swivel joint 106 is rotatably connected to a triple bend swivel joint 112 by a straight pipe segment 114. The triple bend swivel joint 112 may include, e.g., a first male hub 116 which is rotatably connected to the straight pipe segment 114, a female hub 118 which is rotatably connected to the first male hub, and a second male hub 120 which is rotatably connected to the female hub and which includes a flanged end connection 122 similar to the flanged end connection 88 described above in connection with the swivel joint 86.

The flowline assembly 100 also includes two double-bend swivel joints 124, 126 for connecting the second male hub 120 to a valve block 128 on the manifold 102. The first double-bend swivel joint 124 includes a male hub 130 which is connected to the flanged end connection 122 of the male hub 120 via a second rotatable flanged end connection 132, and a female hub 134 which is rotatably connected to the male hub 130. The first double-bend swivel joint 124 is rotatably connected to the second double-bend swivel joint 126 by a straight pipe segment 136. The second double-bend swivel joint 126 includes a female hub 138 which is rotatably connected to the straight pipe segment 136, and a male hub 140 which is rotatable connected to the female hub 138. The male hub 140 is in turn rotatably connected to the valve block 128 by a rotatable flanged end connection 142.

During assembly of the flowline assembly 100, the sub-assembly of the single-bend swivel joint 106 and the triple-bend swivel joint 112 is pre-installed on the tree 104. Also, the sub-assembly comprising the two double-bend swivel joints 124, 126 is connected to the manifold 102 (which is shown mounted on a manifold skid 144), pressure tested, and sent to the fracturing site on the manifold skid. Using this method, only a single connection, namely, the connection between the flanged end connections 122 and 132, is required to be made up in the field, which greatly simplifies the connection of the manifold 102 to the tree 104. It should be understood that the flanged end connections 122, 132 could be any other type of suitable connection, such as a Grayloc® or Speedloc® connector. Also, the manifold skid can be trailer deployed with a gantry arm (not shown) for unfurling the sub-assembly of the two double-bend swivel joints 124, 126.

In the present embodiment, the connections between the components in the first flowline subassembly (i.e., the assembly of the single bend swivel joint 106, the pipe segment 116 and the triple bend swivel joint 112) and the connections between the components in the second flowline subassembly (i.e., the assembly of the straight pipe segment 136 and the two double bend swivel joints 124, 126) are of the type that are typically not made up in the field. For example, the connection between the pipe segment 114 and each of the single bend swivel joint 106 and the triple bend swivel joint 112 are rotary swivel connections which, as may be apparent from the description of the swivel joint embodiment of Figure 2, are normally made up during assembly of the swivel joints. Likewise, the connections between the double bend swivel joints 124, 126 and the pipe segment 136 are rotary swivel connections which are typically made up during assembly of the swivel joints. The present disclosure allows for the first flowline subassembly to be made up off-site, transported to the fracturing site and then connected to the tree 104. Similarly, the second flowline subassembly can be made up off-site and connected to the manifold 102. Moreover, since the manifold 102 is transportable, the second flowline subassembly can be connected to the manifold 102 off-site and this entire assembly can then be transported to the fracturing site. Thus, once at the fracturing site, the only connection that has to be completed in order to fully deploy the flowline assembly is the connection between the flanged end connections 122, 132.

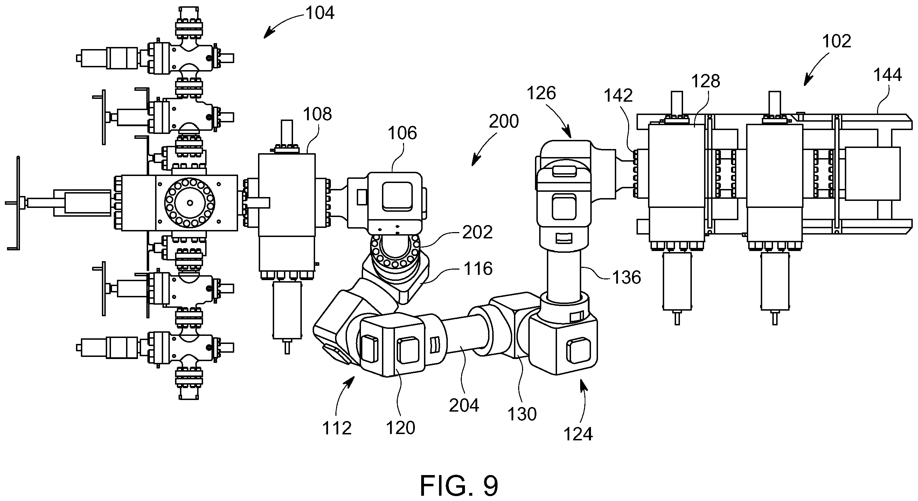

Once assembled, the flowline assembly 100 may be configured such that both the triple-bend assembly 112 and the first double bend assembly 124 rest on a supporting surface 146, such as the ground. As shown in Figure 6, for example, the male hub 116 of the triple-bend assembly 112 and the female hub 134 of the double bend assembly 124 are supported on the supporting surface 146. Due to the generally cube-shaped configuration of the male and female body portions, the male and female hubs 116, 134 contact the supporting surface 146 over an extended area. This helps to stabilize the flowline assembly 100 and thereby reduce stresses on the swivel joints. In addition, the cube-shaped configuration of the male and female hubs 116, 134 ensures that the connecting pipe segments (such as pipe segment 204 in Figure 9) remain elevated off the supporting surface.

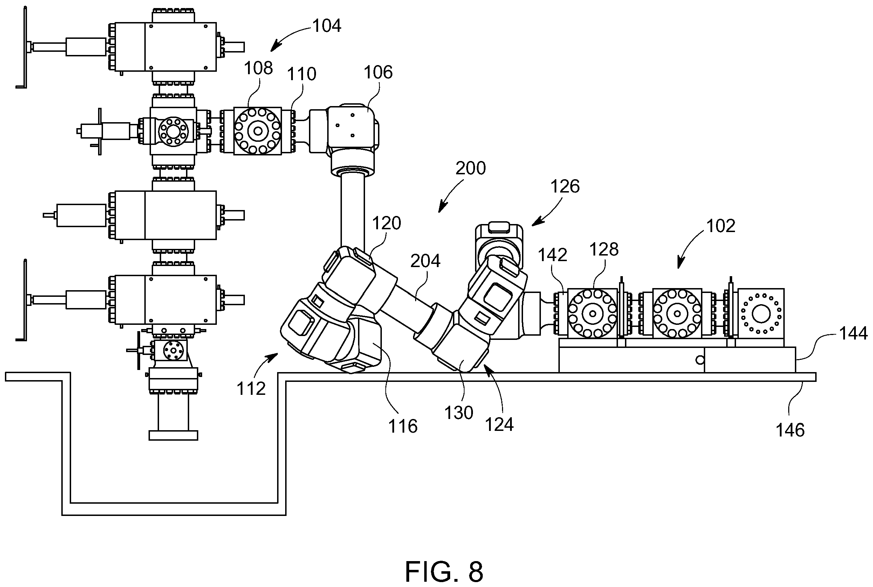

A second embodiment of a flowline assembly in accordance with the present disclosure is shown in Figures 8 and 9. The flowline assembly of this embodiment, generally 200, is similar in many respects to the flowline assembly 100 described above. In the present embodiment, however, the single-bend swivel joint 106 is rotatably connected to the first male hub 116 of the triple-bend swivel joint 112 by a flanged connection 202 (not visible in Fig. 8) between the single-bend swivel joint and the male hub 116 of the-triple bend swivel joint. Also, the male hub 120 of the triple-bend swivel joint 112 is rotatably connected to the male hub 130 of the first double-bend swivel joint 124 by a straight pipe segment 204.

During assembly, the single-bend swivel joint 106 is pre-installed on the tree 104, and the sub-assembly comprising the triple-bend swivel joint 112 and the two double-bend swivel joints 124, 126 is connected to the manifold 102, pressure tested, and sent to the fracturing site on the manifold skid. Thus, only one connection needs to be made up in the field, namely, the flanged connection 202 between the single-bend swivel joint 106 and the triple-bend swivel joint 112. Once assembled, the flowline assembly 200 may be configured such that both the triple-bend assembly 112 and the first double bend assembly 124 rest on the supporting surface 146. Also, the flanged connection 202 could be any other type of suitable connection, such as a Grayloc® or Speedloc® connector.

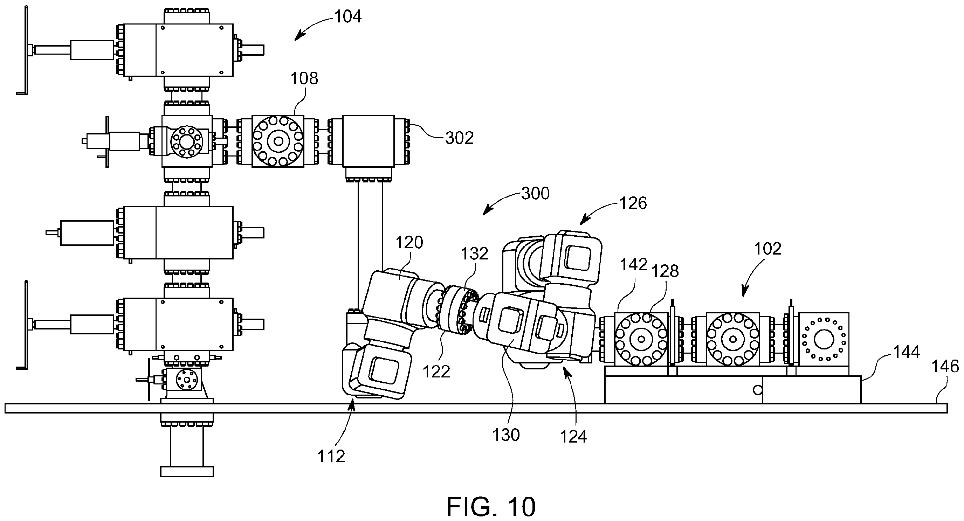

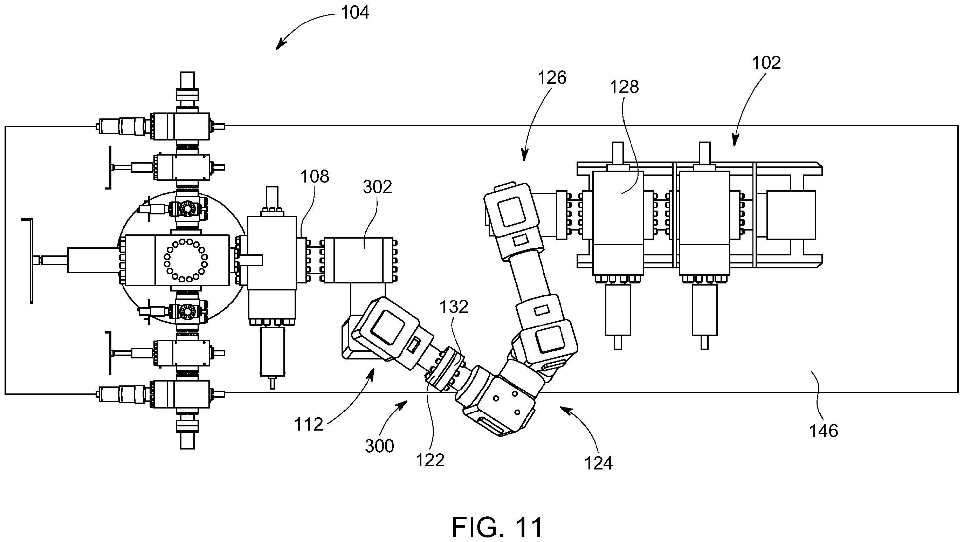

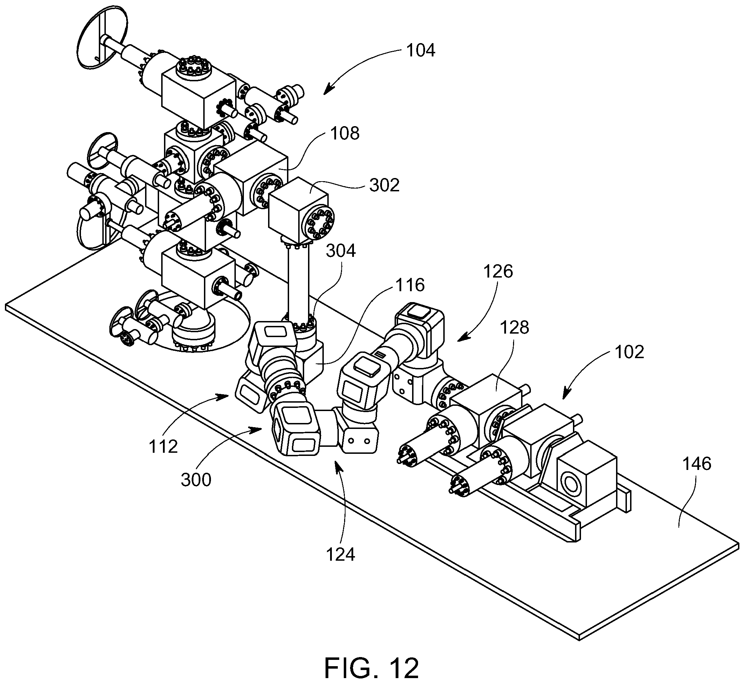

A third embodiment of the flowline assembly of the present disclosure is shown in Figures 10-12. The flowline assembly of this embodiment, generally 300, is somewhat similar to the flowline assembly 100 described above. In this embodiment, however, the single-bend swivel joint 106 is omitted. Instead, the valve block 108 on the tree 104 is connected to a fixed tee 302, which in turn is rotatably connected to the male hub 116 of the triple-bend swivel joint 112 using, e.g., a studded end connection 304 similar to the studded end connection 92 discussed above in connection with the swivel joint 90.

During assembly, the sub-assembly comprising the tee 302 and the triple-bend swivel joint 112 is pre-installed on the tree 104, and the sub-assembly comprising the two double-bend swivel joints 124, 126 is connected to the manifold 102, pressure tested, and sent to the fracturing site on the manifold skid 146. Using this method, only a single connection, namely, the connection between the flanged end connections 122, 132, is required to be made up in the field. As in the previous embodiments, the flanged end connections 122, 132 could be replaced with any other suitable connection, such as a Grayloc® or Speedloc® connector.

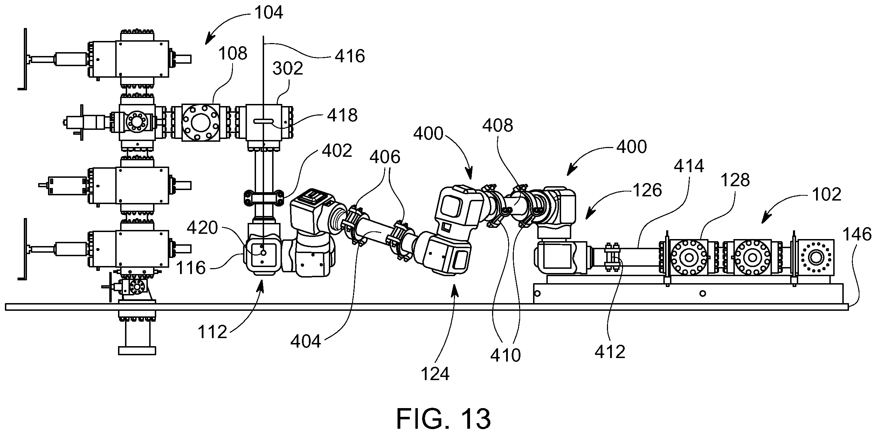

Another embodiment of the flowline assembly of the present disclosure is shown in Figure 13. The flowline assembly of this embodiment, generally 400, is similar to the flowline assembly 300 just described. In the flowline assembly 400, however, the fixed tee 302 is connected to the triple-bend swivel joint 112 using a clamp connector 402, the triple-bend swivel joint is connected to the first double-bend swivel joint 124 using a straight pipe segment 404 and a pair of clamp connectors 406, the first double-bend swivel joint is similarly connected to the second double-bend swivel joint 126 using a straight pipe segment 408 and a pair of clamp connectors 410, and the second double-bend swivel joint is connected to the valve block 128 using a clamp connector 412 which is connected to a straight pipe segment 414 that in turn is bolted to the valve block. Of course, other types of connectors can be used in place of one or more of the clamp connectors.

During assembly, the fixed tee 302 is pre-installed on the tree 104 and the remainder of the flowline assembly 400 is pre-assembled, connected to the manifold 402, pressure tested if necessary, and sent to the fracturing site on the manifold skid 146. Once the manifold skid 146 arrives at the tree 104, the assembly can be connected to the fixed tee 302 with the use of a crane or other lifting device (not shown) which comprises a rope 416 that is guided through a fulcrum eye 418 attached to the tee and secured to a tie off point 420 on the male hub 116. In this manner, the crane can be used to lift the male hub 116 into position for connection to the tee 302. Thus, only one connection, namely, the clamp connector 402 needs to be made up in the field.

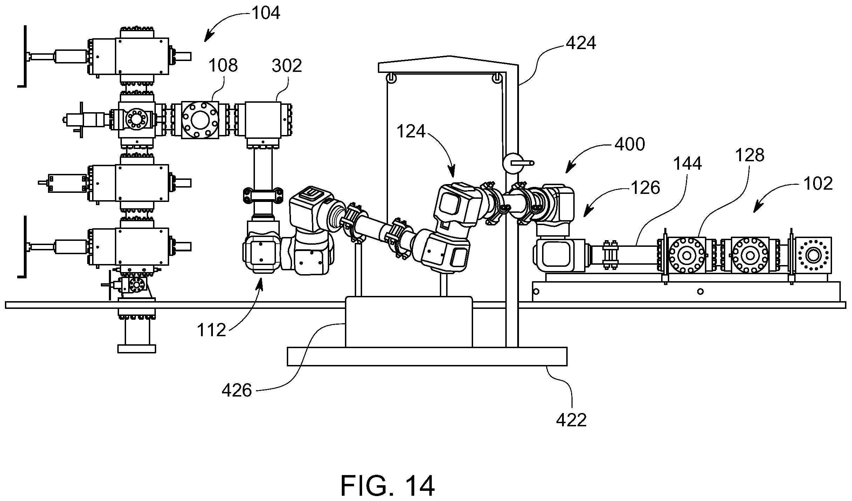

Another method for connecting the flowline assembly 400 between the manifold 102 and the tree is shown in Figure 14. In accordance with this method, the triple-bend swivel joint 112 and the first and second double-bend swivel joints 124, 126 are pre-assembled on an intermediate skid 422, which also may include a hand operated crane 424 and/or a piston lifting device 426. In use, the crane 424 and/or the piston lifting device 426 may be used to lift and level the flowline assembly 400 so that the triple-bend swivel joint 112 can be connected to the fixed tee 302 and the second double-bend swivel joint 126 can be connected to the straight pipe segment 414 which is connected to the manifold valve block 128.

It should be recognized that, while the present disclosure has been presented with reference to certain embodiments, those skilled in the art may develop a wide variation of structural and operational details without departing from the principles of the disclosure. For example, the various elements shown in the different embodiments may be combined in a manner not illustrated above. Therefore, the following claims are to be construed to cover all equivalents falling within the true scope of the disclosure.

## Claims

1. A method for fluidly connecting a fracturing manifold (102) to a fracturing tree (104), the method being **characterized by**:
(a) providing a first flowline assembly which comprises a number of first swivel joints (124, 126);
(b) connecting a first end (142) of the first flowline assembly to the manifold (102);
(c) providing a second flowline assembly;
(d) connecting a first end (110) of the second flowline assembly to the tree (104); and
(e) after the first flowline assembly is connected to the manifold (102) and the second flowline assembly is connected to the tree (104), connecting a second end (132) of the first flowline assembly to a second end (122) of the second flowline assembly to thereby fluidly connect the manifold (102) to the tree (104).

2. The method of claim 1, further comprising, after step (b) but prior to step (e), transporting the manifold (102) with the first flowline assembly connected thereto to a location proximate the tree (104).

3. The method of claim 1 or 2, further comprising, after steps (b) and (d) but prior to step (e), pressure testing at least one of the first flowline assembly and the second flowline assembly.

4. The method of claim 1, further comprising:
providing a lifting device (426); and
after steps (b) and (d) but prior to step (e), using the lifting device to move the second end (132) of the first flowline assembly into position for connection to the second end (122) of the second flowline assembly.

5. The method of claim 1, wherein the second flowline assembly comprises a fixed tee (302) which is connected to the tree (104) and a first pipe segment which is connected to the fixed tee, and wherein a distal end of the first pipe segment comprises the second end of the second flowline assembly.

6. The method of claim 1, wherein the second flowline assembly comprises a fixed tee (302) which is connected to the tree, a first pipe segment which is connected to the fixed tee and a first flowline subassembly which is connected to a distal end of the first pipe segment, wherein the first flowline subassembly comprises a number of second swivel joints (112), and wherein a distal end of the first flowline subassembly comprises the second end (122) of the second flowline assembly.

7. The method of claim 1, wherein the second flowline assembly comprises a second swivel joint which is connected to the tree and a first pipe segment which is connected to the second swivel joint, and wherein a distal end of the first pipe segment comprises the second end of the second flowline assembly.

8. The method of claim 1, wherein the second flowline assembly comprises a second swivel joint (106) which is connected to the tree (104), a first pipe segment which is connected to the second swivel joint and a first flowline subassembly which is connected to a distal end of the first pipe segment, wherein the first flowline subassembly comprises a number of third swivel joints (112), and wherein a distal end of the first flowline subassembly comprises the second end of the second flowline assembly.

9. The method of claim 1, further comprising:
providing a third flowline assembly;
wherein step (e) comprises connecting a first end of the third flowline assembly to a second end of the first flowline assembly and connecting a second end of the third flowline assembly to the second end of the second flowline assembly.

10. The method of claim 9, further comprising:
providing a lifting device (424, 426); and
using the lifting device to move the first and second ends of the third flowline assembly into position for connection to the second end of the first flowline assembly and the second end of the second flowline assembly, respectively.

11. A flowline system for fluidly connecting a fracturing manifold (102) to a fracturing tree (104), the flowline system being **characterized by**:
a first flowline assembly which is pre-assembled with the manifold (102), the first flowline assembly comprising a number of preassembled first flowline components and a first connection member (132) which is located distally of the manifold (102); and
a second flowline assembly which is connected to the tree (104), the second flowline assembly comprising a number of preassembled second flowline components and a second connection member (122) which is located distally of the tree (104);
wherein the first and second connection members (132, 122) are configured to be releasably connected together to thereby fluidly connect the manifold (102) to the tree (104).

12. The system of claim 11, wherein the second flowline assembly comprises a fixed tee (302) which is connected to the tree (104) and a first pipe segment which is connected to the fixed tee, and wherein the second connection member is located at a distal end of the first pipe segment.

13. The system of claim 11, wherein the second flowline assembly comprises a fixed tee (302) which is connected to the tree (104), a first pipe segment which is connected to the fixed tee and a first flowline subassembly which is connected to a distal end of the first pipe segment, wherein the first flowline subassembly comprises a number of swivel joints (112), and wherein the second connection member (122) is located at a distal end of the first flowline subassembly.

14. The system of claim 11, wherein the second flowline assembly comprises a swivel joint which is connected to the tree and a first pipe segment which is connected to the swivel joint, and wherein the second connection member is located at a distal end of the first pipe segment.

15. The system of claim 11, wherein the second flowline assembly comprises a first swivel joint (106) which is connected to the tree (104), a first pipe segment (114) which is connected to the first swivel joint and a first flowline subassembly which is connected to a distal end of the first pipe segment, wherein the first flowline subassembly comprises a number of second swivel joints (112), and wherein the second connection member (122) is located at a distal end of the first flowline subassembly.

16. The system of claim 11, further comprising:
a third flowline assembly which comprises a first end on which a third connection member is located and a second end on which a fourth connection member is located;
wherein the first and third connection members and the second and fourth connection members are configured to be releasably connected together, respectively, to thereby fluidly connect the manifold to the tree.

17. The system of claim 16, further comprising a lifting device (424, 426) which is configured to move the third flowline assembly into position for connection of the first connection member to the third connection member and the second connection member to the fourth connection member.

## Patentansprüche

1. Verfahren zur Herstellung einer Fluidverbindung eines Fracking-Manifolds (102) mit einem Fracking-Baum (104), wobei das Verfahren **gekennzeichnet ist durch**:
(a) Bereitstellen einer ersten Flowline-Anordnung, die eine Anzahl von ersten Drehgelenken (124, 126) umfasst;
(b) Verbinden eines ersten Endes (142) der ersten Flowline-Anordnung mit dem Manifold (102);
(c) Bereitstellen einer zweiten Flowline-Anordnung;
(d) Verbinden eines ersten Endes (110) der zweiten Flowline-Anordnung mit dem Baum (104) und,
(e) nachdem die erste Flowline-Anordnung mit dem Manifold (102) verbunden wurde und die zweite Flowline-Anordnung mit dem Baum (104) verbunden wurde, Verbinden eines zweiten Endes (132) der ersten Flowline-Anordnung mit einem zweiten Ende (122) der zweiten Flowline-Anordnung, um dadurch eine Fluidverbindung des Manifolds (102) mit dem Baum (104) herzustellen.

2. Verfahren nach Anspruch 1, das ferner nach Schritt (b), aber vor Schritt (e) Transportieren des Manifolds (102) mit der ersten Flowline-Anordnung, die damit verbunden ist, zu einer Stelle in der Nähe des Baums (104) umfasst.

3. Verfahren nach Anspruch 1 oder 2, das ferner nach Schritten (b) und (d), aber vor Schritt (e) Druckprüfung wenigstens einer von der ersten Flowline-Anordnung und der zweiten Flowline-Anordnung umfasst.

4. Verfahren nach Anspruch 1, ferner umfassend:
Bereitstellen einer Hebevorrichtung (426) und
nach Schritten (b) und (d), aber vor Schritt (e) Verwenden der Hebevorrichtung, um das zweite Ende (132) der ersten Flowline-Anordnung in Position zur Verbindung mit dem zweiten Ende (122) der zweiten Flowline-Anordnung zu bewegen.

5. Verfahren nach Anspruch 1, wobei die zweite Flowline-Anordnung ein festes T-Stück (302), das mit dem Baum (104) verbunden ist, und ein erstes Rohrsegment, das mit dem festen T-Stück verbunden ist, umfasst und wobei ein distales Ende des ersten Rohrsegmentes das zweite Ende der zweiten Flowline-Anordnung umfasst.

6. Verfahren nach Anspruch 1, wobei die zweite Flowline-Anordnung ein festes T-Stück (302), das mit dem Baum verbunden ist, ein erstes Rohrsegment, das mit dem festen T-Stück verbunden ist, und eine erste Flowline-Unteranordnung, die mit einem distalen Ende des ersten Rohrsegmentes verbunden ist, umfasst, wobei die erste Flowline-Unteranordnung eine Anzahl von zweiten Drehgelenken (112) umfasst, und wobei ein distales Ende der ersten Flowline-Unteranordnung das zweite Ende (122) der zweiten Flowline-Anordnung umfasst.

7. Verfahren nach Anspruch 1, wobei die zweite Flowline-Anordnung ein zweites Drehgelenk, das mit dem Baum verbunden ist, und ein erstes Rohrsegment, das mit dem zweiten Drehgelenk verbunden ist, umfasst, und wobei ein distales Ende des ersten Rohrsegmentes das zweite Ende der zweiten Flowline-Anordnung umfasst.

8. Verfahren nach Anspruch 1, wobei die zweite Flowline-Anordnung ein zweites Drehgelenk (106), das mit dem Baum (104) verbunden ist, ein erstes Rohrsegment, das mit dem zweiten Drehgelenk verbunden ist, und eine erste Flowline-Unteranordnung, die mit einem distalen Ende des ersten Rohrsegmentes verbunden ist, umfasst, wobei die erste Flowline-Unteranordnung eine Anzahl von dritten Drehgelenken (112) umfasst und wobei ein distales Ende der ersten Flowline-Unteranordnung das zweite Ende der zweiten Flowline-Anordnung umfasst.

9. Verfahren nach Anspruch 1, ferner umfassend:
Bereitstellen einer dritten Flowline-Anordnung;
wobei Schritt (e) Verbinden eines ersten Endes der dritten Flowline-Anordnung mit einem zweiten Ende der ersten Flowline-Anordnung und Verbinden eines zweiten Endes der dritten Flowline-Anordnung mit dem zweiten Ende der zweiten Flowline-Anordnung umfasst.

10. Verfahren nach Anspruch 9, ferner umfassend:
Bereitstellen einer Hebevorrichtung (424, 426) und
Verwenden der Hebevorrichtung, um das erste und das zweite Ende der dritten Flowline-Anordnung in Position zur Verbindung mit dem zweiten Ende der ersten Flowline-Anordnung bzw. dem zweiten Ende der zweiten Flowline-Anordnung zu bewegen.

11. Flowline-System zur Herstellung einer Fluidverbindung eines Fracking-Manifolds (102) mit einem Fracking-Baum (104), wobei das Flowline-System **gekennzeichnet ist durch**:
eine erste Flowline-Anordnung, die mit dem Manifold (102) vormontiert ist, wobei die erste Flowline-Anordnung eine Anzahl von vormontierten ersten Flowline-Komponenten und ein erstes Verbindungsglied (132), das sich distal zu Manifold (102) befindet, umfasst; und
eine zweite Flowline-Anordnung, die mit dem Baum (104) verbunden ist, wobei die zweite Flowline-Anordnung eine Anzahl von vormontierten zweiten Flowline-Komponenten und ein zweites Verbindungsglied (122), das sich distal zu dem Baum (104) befindet, umfasst;
wobei das erste und das zweite Verbindungsglied (132, 122) so konfiguriert sind, dass sie lösbar miteinander verbunden sind, um eine Fluidverbindung des Manifolds (102) mit dem Baum (104) herzustellen.

12. System nach Anspruch 11, wobei die zweite Flowline-Anordnung ein festes T-Stück (302), das mit dem Baum (104) verbunden ist, und ein erstes Rohrsegment, das mit dem festen T-Stück verbunden ist, umfasst, und wobei das zweite Verbindungsglied sich an einem distalen Ende des ersten Rohrsegmentes befindet.

13. System nach Anspruch 11, wobei die zweite Flowline-Anordnung ein festes T-Stück (302), das mit dem Baum (104) verbunden ist, ein erstes Rohrsegment, das mit dem festen T-Stück verbunden ist, und eine erste Flowline-Unteranordnung, die mit einem distalen Ende des ersten Rohrsegmentes verbunden ist, umfasst, wobei die erste Flowline-Unteranordnung eine Anzahl von zweiten Drehgelenken (112) umfasst und wobei das zweite Verbindungsglied (122) sich an einem distalen Ende der ersten Flowline-Unteranordnung befindet.

14. System nach Anspruch 11, wobei die zweite Flowline-Anordnung ein Drehgelenk, das mit dem Baum verbunden ist, und ein erstes Rohrsegment, das mit dem Drehgelenk verbunden ist, umfasst, und wobei das zweite Verbindungsglied sich an einem distalen Ende des ersten Rohrsegmentes befindet.

15. System nach Anspruch 11, wobei die zweite Flowline-Anordnung ein erstes Drehgelenk (106), das mit dem Baum (104) verbunden ist, ein erstes Rohrsegment (114), das mit dem ersten Drehgelenk verbunden ist, und eine erste Flowline-Unteranordnung, die mit einem distalen Ende des ersten Rohrsegmentes verbunden ist, umfasst, wobei die erste Flowline-Unteranordnung eine Anzahl von zweiten Drehgelenken (112) umfasst und wobei sich das zweite Verbindungsglied (122) an einem distalen Ende der ersten Flowline-Unteranordnung befindet.

16. System nach Anspruch 11, ferner umfassend:
eine dritte Flowline-Anordnung, die ein erstes Ende, an welchem sich ein drittes Verbindungsglied befindet, und ein zweites Ende, an welchem sich ein viertes Verbindungsglied befindet, umfasst;
wobei das erste und das dritte Verbindungsglied sowie das zweite und das vierte Verbindungsglied so konfiguriert sind, dass sie jeweils lösbar miteinander verbunden sind, um eine Fluidverbindung des Manifolds mit dem Baum herzustellen.

17. System nach Anspruch 16, das ferner eine Hebevorrichtung (424, 426) umfasst, die konfiguriert ist, um die dritte Flowline-Anordnung in Position zur Verbindung des ersten Verbindungsglieds mit dem dritten Verbindungsglied und des zweiten Verbindungsglieds mit dem vierten Verbindungsglied zu bewegen.

## Revendications

1. Méthode pour connecter fluidiquement un collecteur de fracturation (102) à un arbre de fracturation (104), la méthode étant **caractérisée par** :
(a) la fourniture d'un premier assemblage de conduite d'écoulement qui comprend un certain nombre de premiers joints tournants (124, 126) ;
(b) la connexion d'une première extrémité (142) du premier assemblage de conduite d'écoulement au collecteur (102) ;
(c) la fourniture d'un deuxième assemblage de conduite d'écoulement ;
(d) la connexion d'une première extrémité (110) du deuxième assemblage de conduite d'écoulement à l'arbre (104) ; et
(e) après que le premier assemblage de conduite d'écoulement a été connecté au collecteur (102) et que le deuxième assemblage de conduite d'écoulement a été connecté à l'arbre (104), la connexion d'une seconde extrémité (132) du premier assemblage de conduite d'écoulement à une seconde extrémité (122) du deuxième assemblage de conduite d'écoulement pour connecter ainsi fluidiquement le collecteur (102) à l'arbre (104).

2. Méthode selon la revendication 1, comprenant en outre, après l'étape (b) mais avant l'étape (e), le transport du collecteur (102) avec le premier assemblage de conduite d'écoulement connecté à celui-ci vers un emplacement proche de l'arbre (104).

3. Méthode selon la revendication 1 ou 2, comprenant en outre, après les étapes (b) et (d) mais avant l'étape (e), un essai de pression d'au moins l'un parmi le premier assemblage de conduite d'écoulement et le deuxième assemblage de conduite d'écoulement.

4. Méthode selon la revendication 1, comprenant en outre :
la fourniture d'un dispositif de levage (426) ; et
après les étapes (b) et (d) mais avant l'étape (e), l'utilisation du dispositif de levage pour déplacer la seconde extrémité (132) du premier assemblage de conduite d'écoulement en position pour la connexion à la seconde extrémité (122) du deuxième assemblage de conduite d'écoulement.

5. Méthode selon la revendication 1, dans laquelle le deuxième assemblage de conduite d'écoulement comprend un té fixe (302) qui est connecté à l'arbre (104) et un premier segment de tuyau qui est connecté au té fixe, et dans laquelle une extrémité distale du premier segment de tuyau comprend la seconde extrémité du deuxième assemblage de conduite d'écoulement.

6. Méthode selon la revendication 1, dans laquelle le deuxième assemblage de conduite d'écoulement comprend un té fixe (302) qui est connecté à l'arbre, un premier segment de tuyau qui est connecté au té fixe et un premier sous-assemblage de conduite d'écoulement qui est connecté à une extrémité distale du premier segment de tuyau, dans laquelle le premier sous-assemblage de conduite d'écoulement comprend un certain nombre de deuxièmes joints tournants (112), et dans laquelle une extrémité distale du premier sous-assemblage de conduite d'écoulement comprend la seconde extrémité (122) du deuxième assemblage de conduite d'écoulement.

7. Méthode selon la revendication 1, dans laquelle le deuxième assemblage de conduite d'écoulement comprend un deuxième joint tournant qui est connecté à l'arbre et un premier segment de tuyau qui est connecté au deuxième joint tournant, et dans laquelle une extrémité distale du premier segment de tuyau comprend la seconde extrémité du deuxième assemblage de conduite d'écoulement.

8. Méthode selon la revendication 1, dans laquelle le deuxième assemblage de conduite d'écoulement comprend un deuxième joint tournant (106) qui est connecté à l'arbre (104), un premier segment de tuyau qui est connecté au deuxième joint tournant et un premier sous-assemblage de conduite d'écoulement qui est connecté à une extrémité distale du premier segment de tuyau, dans laquelle le premier sous-assemblage de conduite d'écoulement comprend un certain nombre de troisièmes joints tournants (112), et dans laquelle une extrémité distale du premier sous-assemblage de conduite d'écoulement comprend la seconde extrémité du deuxième assemblage de conduite d'écoulement.

9. Méthode selon la revendication 1, comprenant en outre :
la fourniture d'un troisième assemblage de conduite d'écoulement ;
dans laquelle l'étape (e) comprend la connexion d'une première extrémité du troisième assemblage de conduite d'écoulement à une seconde extrémité du premier assemblage de conduite d'écoulement, et la connexion d'une seconde extrémité du troisième assemblage de conduite d'écoulement à la seconde extrémité du deuxième assemblage de conduite d'écoulement.

10. Méthode selon la revendication 9, comprenant en outre :
la fourniture d'un dispositif de levage (424, 426) ; et
l'utilisation du dispositif de levage pour déplacer les première et seconde extrémités du troisième assemblage de conduite d'écoulement en position pour la connexion à la seconde extrémité du premier assemblage de conduite d'écoulement et à la seconde extrémité du deuxième assemblage de conduite d'écoulement, respectivement.

11. Système de conduite d'écoulement pour connecter fluidiquement un collecteur de fracturation (102) à un arbre de fracturation (104), le système de conduite d'écoulement étant **caractérisé par** :
un premier assemblage de conduite d'écoulement qui est pré-assemblé avec le collecteur (102), le premier assemblage de conduite d'écoulement comprenant un certain nombre de premiers composants de conduite d'écoulement pré-assemblés et un premier élément de connexion (132) qui est situé de manière distale par rapport au collecteur (102) ; et
un deuxième assemblage de conduite d'écoulement qui est connecté à l'arbre (104), le deuxième assemblage de conduite d'écoulement comprenant un certain nombre de seconds composants de conduite d'écoulement pré-assemblés et un deuxième élément de connexion (122) qui est situé de manière distale par rapport à l'arbre (104) ;
dans lequel les premier et deuxième éléments de connexion (132, 122) sont configurés être connectés ensemble de manière libérable pour connecter ainsi fluidiquement le collecteur (102) à l'arbre (104).

12. Système selon la revendication 11, dans lequel le deuxième assemblage de conduite d'écoulement comprend un té fixe (302) qui est connecté à l'arbre (104) et un premier segment de tuyau qui est connecté au té fixe, et dans lequel le deuxième élément de connexion est situé à une extrémité distale du premier segment de tuyau.

13. Système selon la revendication 11, dans lequel le deuxième assemblage de conduite d'écoulement comprend un té fixe (302) qui est connecté à l'arbre (104), un premier segment de tuyau qui est connecté au té fixe et un premier sous-assemblage de conduite d'écoulement qui est connecté à une extrémité distale du premier segment de tuyau, dans lequel le premier sous-assemblage de conduite d'écoulement comprend un certain nombre de joints tournants (112), et dans lequel le deuxième élément de connexion (122) est situé à une extrémité distale du premier sous-assemblage de conduite d'écoulement.

14. Système selon la revendication 11, dans lequel le deuxième assemblage de conduite d'écoulement comprend un joint tournant qui est connecté à l'arbre et un premier segment de tuyau qui est connecté au joint tournant, et dans lequel le deuxième élément de connexion est situé à une extrémité distale du premier segment de tuyau.

15. Système selon la revendication 11, dans lequel le deuxième assemblage de conduite d'écoulement comprend un premier joint tournant (106) qui est connecté à l'arbre (104), un premier segment de tuyau (114) qui est connecté au premier joint tournant et un premier sous-assemblage de conduite d'écoulement qui est connecté à une extrémité distale du premier segment de tuyau, dans lequel le premier sous-assemblage de conduite d'écoulement comprend un certain nombre de deuxièmes joints tournants (112), et dans lequel le deuxième élément de connexion (122) est situé à une extrémité distale du premier sous-assemblage de conduite d'écoulement.

16. Système selon la revendication 11, comprenant en outre :
un troisième assemblage de conduite d'écoulement qui comprend une première extrémité sur laquelle un troisième élément de connexion est situé et une seconde extrémité sur laquelle un quatrième élément de connexion est situé ;
dans lequel les premier et troisième éléments de connexion et les deuxième et quatrième éléments de connexion sont configurés pour être connectés ensemble de manière libérable, respectivement, pour connecter ainsi fluidiquement le collecteur à l'arbre.

17. Système selon la revendication 16, comprenant en outre un dispositif de levage (424, 426) qui est configuré pour déplacer le troisième assemblage de conduite d'écoulement en position pour la connexion du premier élément de connexion au troisième élément de connexion et du deuxième élément de connexion au quatrième élément de connexion.
